# EUROPÄISCHE PATENTSCHRIFT

(11) **EP 3 270 750 B1**
(45) Veröffentlichungstag und Bekanntmachung des Hinweises auf die Patenterteilung: **29.04.2020**
(21) Anmeldenummer: 17704480.7
(22) Anmeldetag: 13.02.2017
(51) Int. Cl.: A47J 31/44, A47J 31/46

(54) **GETRÄNKEBEREITER, INSBESONDERE KAFFEEMASCHINE, FÜR FESTWASSERANSCHLUSS SOWIE FESTWASSERKIT**
BEVERAGE MAKER, IN PARTICULAR COFFEE MACHINE, FOR MAINS-WATER CONNECTION, AND MAINS-WATER KIT
APPAREIL DE PRÉPARATION DE BOISSONS, EN PARTICULIER MACHINE À CAFÉ, POUR RACCORDEMENT À UNE ARRIVÉE D'EAU ET KIT DE RACCORDEMENT À UNE ARRIVÉE D'EAU

(30) Priorität: 15.02.2016 DE 102016202257
(43) Veröffentlichungstag der Anmeldung: 24.01.2018
(73) Patentinhaber: WMF Group GmbH, 73312 Geislingen/Steige (DE)
(72) Erfinder: EICKE, Joel, 89075 Ulm (DE); GÖLTENBOTH, Frank, 89134 Blaustein (DE); STÄB, Rolf, 89191 Nellingen (DE)
(74) Vertreter: Pfenning, Meinig & Partner mbB
(86) Internationale Anmeldenummer: PCT/EP2017/053148
(87) Internationale Veröffentlichungsnummer: WO 2017/140618

(56) Entgegenhaltungen:
- WO-A1-98/27852
- WO-A2-2005/077232
- US-A1- 2015 245 736

## Beschreibung

Die vorliegende Erfindung bezieht sich auf einen Getränkebereiter gemäß des Oberbegriffs aus Anspruch 1. Insbesondere kann es sich bei dem erfindungsgemäßen Getränkebereiter um eine elektrisch betriebene Kaffeemaschine (bevorzugt um einen Kaffeevollautomaten) handeln. Auch wenn die vorliegende Erfindung nachfolgend speziell am Beispiel einer (elektrisch betriebenen) Kaffeemaschine beschrieben wird, so sind erfindungsgemäß auch andere Getränkebereiter, beispielsweise elektrisch betriebene Brühautomaten zum Aufbrühen verschiedener Getränkespezialitäten, wie z. B. Trinksuppen, Tees, .... umfasst.

In der Gastronomie macht es Sinn, ab einer gewissen Tassenleistung pro Tag (ggf. auch aus Bequemlichkeitsgründen) einen Getränkebereiter wie z. B. eine Kaffeemaschine mit einem Festwasseranschluss zu versehen. Damit wird der Getränkebereiter (nachfolgend vereinfacht auch Maschine genannt) permanent mit Wasser versorgt, so dass nicht ständig wieder ein Tank des Getränkebereiters am Wasserhahn manuell vom Benutzer aufgefüllt werden muss. Häufig kommt es vor, dass ein Gastronomiebetrieb im Vorfeld einer Anschaffung unschlüssig ist, ob eine Tank- oder eine Festwassermaschine angeschafft werden soll. Ein Nachrüsten einer bereits angeschafften Maschine auf die jeweils andere Technik ist aber sehr aufwändig, da es mit einem Umbau der Maschine durch einen Kundendiensttechniker verbunden ist (oder evtl. ist es sogar aus Konstruktionsgründen gar nicht mehr möglich).

In der Regel entscheidet somit ein anschaffender Betrieb beim Kauf einer Maschine, ob eine Festwassermaschine oder eine Tankmaschine angeschafft werden soll. Insbesondere ist ein Mischbetrieb, bei dem dieselbe Maschine z.B. im Restaurant oder Frühstücksraum am Fest- bzw. Trinkwassernetz betrieben wird und wenn benötigt (z.B. in einem Tagungsraum oder Biergarten) auch unabhängig bzw. nicht verbunden mit dem Trinkwassernetz als Tankmaschine, nicht möglich.

Aus dem Stand der Technik (EP 2 702 908 A1) ist eine Festwassermaschine bekannt, die einen fest eingebauten, also nicht manuell entnehmbaren Tank aufweist. Der Tank dient als fest eingebauter Pufferspeicher, der über den Festwasseranschluss befüllt wird.

Ausgehend vom Stand der Technik ist es die Aufgabe der vorliegenden Erfindung, einen Getränkebereiter zur Verfügung zu stellen, der die Vorteile einer Festwassermaschine mit den Vorteilen einer Tankmaschine vereinigt. Aufgabe ist darüber hinaus, dass dieser Getränkebereiter einfach und leise betreibbar sein soll, wobei vorteilhafterweise auch ein einfaches Sauberhalten der Maschine und ihrer Umgebung ermöglicht sein soll.

Diese Aufgabe wird durch einen Getränkebereiter gemäß Anspruch 1 sowie durch ein Festwasserkit für einen solchen Getränkebereiter gemäß Anspruch 14 gelöst. Vorteilhafte Ausführungsvarianten lassen sich jeweils den abhängigen Ansprüchen entnehmen.

Nachfolgend wird die vorliegende Erfindung am Beispiel einer elektrisch betriebenen Kaffeemaschine (speziell: Kaffeevollautomat) beschrieben. Dabei erfolgt zunächst eine allgemeine Beschreibung und anschließend eine Beschreibung eines Ausführungsbeispiels im Detail. Erfindungsgemäß umfasst sind jedoch auch Getränkeautomaten, die zur Zubereitung anderer Getränke, die Wasser benötigen, dienen (z. B. Getränkebereiter für Heiß- und für Kaltgetränke in Form von Tee, Trinksuppe, Sirupgetränken, schokoladenbasierten Getränken etc.).

Ein(e) erfindungsgemäße(r) Getränkebereiter, Kaffeemaschine oder Kaffeevollautomat ist im Anspruch 1 beschrieben. Da der grundlegende Aufbau solcher Maschinen dem Fachmann bekannt ist (siehe beispielsweise die in der CH 706 100 A1 oder in der DE 10 2014 212 645 A1 beschriebenen elektrischen Kaffeemaschinen) werden nachfolgend nur diejenigen Merkmale des erfindungsgemäßen Getränkebereiters am Beispiel einer Kaffeemaschine beschrieben, die für das Verständnis der vorliegenden Erfindung wesentlich sind.

Beim Trinkwassernetz handelt es sich insbesondere um ein Leitungsnetz eines Gebäudes, mit dem die erfindungsgemäße Maschine zur Entnahme von Trinkwasser bzw. zum Einleiten von Trinkwasser in die Maschine über geeignete Verbindungselemente (hydraulische Steckverbindungen, Ventile wie z. B. Eckventile, Schlauchelemente etc.) verbunden werden kann. Es kann sich beim Trinkwassernetz gemäß der vorliegenden Erfindung aber auch um eine Wasserversorgung handeln, die aus einem größeren Vorratsbehälter und einer Druckerhöhungslage besteht. (Beim Trinkwassernetz gemäß der Erfindung steht ganz allgemein das zugeführte Wasser unter Druck und muss nicht angesaugt werden.)

Unter einem manuellen bzw. händischen Einfüllen (wie z. B. einem Eingießen mithilfe eines externen Gefäßes wie z. B. einer Kanne) wird insbesondere verstanden, dass der Zulauf des Getränkebereiters, der den Getränkebereiter mit dem Trinkwassernetz verbindet, zum Auffüllen des Wassertanks nicht benutzt wird, sondern dass der Tank z. B. aus einem Gehäuse des Getränkebereiters herausgezogen wird und von seiner Oberseite her z. B. über einen Wasserhahn oder mit einem Messbecher oder dergleichen mit (Trink-)Wasser befüllt wird.

Der erfindungsgemäße Getränkebereiter kann somit insbesondere so ausgebildet sein, dass in nicht verbundenem Zustand (z. B. wenn er aus dem Gebäude für eine Feier in den Garten verbracht wird) der Wassertank immer noch händisch befüllt werden kann. Letzteres kann insbesondere dadurch geschehen, dass der Wassertank händisch durch den Benutzer aus dem Gehäuse der Maschine entnommen wird und z. B. im Gebäude oder außerhalb des Gebäudes unter einen Wasserhahn gehalten wird (oder mittels eines Transportgefäßes für Wasser durch Eingießen befüllt wird).

Vorteilhafterweise realisierbare Merkmale lassen sich Anspruch 2 entnehmen.

Weitere vorteilhafterweise realisierbare Merkmale lassen sich Anspruch 3 entnehmen. Das Umschalten (im verbundenen Zustand) zwischen den beiden Betriebsmoden kann manuell über eine geeignete Eingabemöglichkeit an einem Gehäuse des Getränkebereiters (z. B. über einen Touchscreen oder einen Druckknopf am Gehäuse) durch den Benutzer erfolgen. Ebenso ist jedoch ein automatisiertes (über die Steuereinrichtung programmgesteuertes) Umschalten in diesem Zustand möglich. Beispielsweise kann, wenn die Steuereinrichtung feststellt, dass der verbundene Zustand vorliegt, automatisch immer in den zweiten Betriebsmodus geschaltet werden. Die Steuereinrichtung kann einen Mikrocontroller mit einem Speicher und einem darin abgelegten entsprechend ausgebildeten Steuerprogramm umfassen. Das Feststellen, ob der verbundene oder der nicht-verbundene Zustand vorliegt, kann über einen Verbindungssensor (oder auch über einen Präsenzsensor) erfolgen.

Der zweite Betriebsmodus kann durch geeignete Steuerprogramme im Speicher der Steuereinrichtung auf vielfältige Art und Weise eingerichtet werden. So kann beispielsweise am Wassertank mindestens ein Füllstandssensor vorgesehen sein, der den Füllstand im Wassertank erfasst. Der aktuelle Füllstand kann vom Sensor an die Steuereinrichtung übertragen werden und auf Basis der übertragenen Datenwerte kann die Steuereinrichtung im zweiten Betriebsmodus das Befüllen des Wassertanks so steuern, dass der Wassertank intervallweise nach vordefinierten Zeitintervallen immer gerade mit soviel Trinkwasser aus dem Trinkwassernetz befüllt wird, dass ein maximaler Füllstand im Wassertank erreicht wird. Ebenso ist es jedoch auch denkbar, den zweiten Betriebsmodus so zu steuern, dass immer nur dann frisches Wasser aus dem Trinkwassernetz in den Tank eingefüllt wird, wenn auch gleichzeitig (während des Zubereitens eines Getränks durch den Getränkebereiter) Wasser aus dem Tank entnommen wird. Siehe hierzu auch die nachfolgenden Beispiele.

Weitere vorteilhafterweise realisierbare Merkmale lassen sich Anspruch 4 entnehmen. Die Merkmale dieses Anspruchs (dies gilt auch für alle weiteren abhängigen Ansprüche) können mit Merkmalen anderer abhängiger Ansprüche im Rahmen der vorgegebenen Anspruchsstruktur beliebig miteinander kombiniert werden.

Unter einem Unterbringen des Wassertanks im Gehäuse wird verstanden, dass der Wassertank zumindest abschnittsweise, bevorzugt vollständig innerhalb eines vom Gehäuse umschlossenen Volumens positionierbar ist bzw. positioniert wird (beispielsweise, indem der Tank in das Gehäuse, z. B. in eine Tankaufnahme des Gehäuses, eingeschoben wird).

Weitere vorteilhafterweise realisierbare Merkmale lassen sich Anspruch 5 entnehmen.

Der elektrische Anschluss kann als Stecker ausgebildet sein, wobei der Getränkebereiter (insbesondere: dessen Gehäuse) eine dazu komplementäre Anschlussbuchse zum Aufnehmen dieses Steckers aufweisen kann. Die Anschlussbuchse kann mittels einer bevorzugt (aber nicht notwendigerweise) bidirektionalen elektrischen Daten- und Steuerleitung mit der Steuereinrichtung verbunden sein, so dass die Steuereinrichtung Funktionen des Festwasserkits (insbesondere: einen Flussregler und/oder ein Ventil desselben) steuern und/oder regeln kann. Aus Kostengründen kann es sich bei der elektrischen Daten- und Steuerleitung um eine einfache elektrische Leitung handeln, über die das Ventil entweder bestromt wird oder nicht (das Ventil kann dann ein einfaches Ventil sein, dass sich durch ein Bestromen oder Nicht-Bestromen öffnet oder schließt).

Das Festwasserkit kann einen weiteren hydraulischen Anschluss aufweisen, mit dem es auf seiner getränkebereiterabgewandten, d. h. wasserstromaufwärtigen Seite bauseitig (beispielsweise in einem Gebäude, in dem der Getränkebereiter aufgestellt ist) hydraulisch mit dem Trinkwassernetz verbunden werden kann. Beispielsweise kann der weitere hydraulische Anschluss des Festwasserkits an einem hydraulischen Anschluss des Trinkwassernetzes, z. B. einem Ventil (z.B. Eckventil), einem Wasserhahn oder Absperrhahn oder dergleichen des Trinkwassernetzes, befestigt werden.

Ebenso kann das Festwasserkit einen weiteren mechanischen Anschluss aufweisen, mit dem es auf seiner getränkebereiterabgewandten, d. h. wasserstromaufwärtigen Seite bauseitig (beispielsweise an der Wand eines Hauses, in dem der Getränkebereiter aufgestellt ist) mechanisch fixiert werden kann.

Die Verbindung zwischen dem Festwasserkit und dem Trinkwassernetz kann als mechanisch sicherbare, hydraulische Steckverbindung ausgebildet sein.

Der Wassertank kann einen Abschnitt des Gehäuses des Getränkebereiters ausbilden und zumindest teilweise die getränkebereiterseitigen Anschlüsse (d. h. den hydraulischen, mechanischen und/oder elektrischen Anschluss) umfassen. Ebenso ist es aber möglich, dass besagte getränkebereiterseitigen Anschlüsse alle (oder manche davon) an einem anderen Gehäuseabschnitt des Getränkebereiters, z. B. an einer Bodengruppe des Gehäuses des Getränkebereiters, ausgebildet sind (wobei der hydraulische Anschluss des Festwasserkits dann über eine im Gehäuseinneren des Getränkebereiters verlaufende weitere Wasserleitung die hydraulische Verbindung zum Wassertank herstellen kann). Diese Variante ist im nachfolgenden Ausführungsbeispiel gezeigt.

Die beiden zueinander komplementären hydraulischen Anschlüsse, also der hydraulische Anschluss des Gehäuses und der hydraulische Anschluss des Festwasserkits, können als hydraulische Steckverbindung ausgebildet sein, die zusätzlich mechanisch (beispielsweise über eine Schraubverbindung) gesichert sein kann.

Gemäß der Ansprüche 4 und 5 kann somit Trinkwasser vom Trinkwassernetz über das Festwasserkit in den Wassertank des Getränkebereiters eingeleitet werden, wenn der Getränkebereiter über den Zulauf mit dem Trinkwassernetz hydraulisch verbunden ist. Dabei kann das Festwasserkit als Bauelement komplett (also mit all seinen einzelnen Bauteilen) ein Teil des Zulaufs sein und besagter Zulauf kann wiederum als Bauelement (also mit all seinen einzelnen Bauteilen) ein Teil des Getränkebereiters sein. Ebenso ist es aber möglich (vgl. auch nachfolgendes Ausführungsbeispiel), dass nur einzelne Bauteile des Zulaufs zum Getränkebereiter gehören, während andere einzelne Bauteile des Zulaufs zu einem vom Getränkebereiter komplett separierten Festwasserkit gehören (also zu einem getränkebereiterexternen Festwasserkit gehören). Ein solches getränkebereiterexternes Festwasserkit ist dann an den Getränkebereiter anschließbar ausgebildet.

Es ist möglich, dass die zum Getränkebereiter gehörenden Bauteile vom Zulauf den hydraulischen Anschluss des Gehäuses sowie die weitere Wasserleitung (innerhalb des Gehäuses) zur Verbindung zum Wassertank umfassen (sowie gegebenenfalls noch einen mechanischen Anschluss und/oder einen elektrischen Anschluss am Gehäuse des Getränkebereiters), wobei das Festwasserkit ein getränkebereiterexternes (eventuell auch zulaufexternes), mehrere einzelne Bauteile umfassendes Bauelement ist: Letzteres stellt dann eine Einheit dar, die zum hydraulischen Anschließen (und bevorzugt auch zum mechanischen und zum elektrischen Anschließen) an das Gehäuse des Getränkebereiters ausgebildet ist. Bevorzugt kann also über ein externes Festwasserkit durch hydraulisches Zwischenschalten des Festwasserkits zwischen den Getränkebereiter einerseits und das Trinkwassernetz andererseits eine hydraulische Verbindung hergestellt werden, die der Wasserzufuhr vom Trinkwassernetz in den Getränkebereiter (bzw. in den Wassertank desselben) dient.

Vorzugsweise ist dabei das externe Festwasserkit auch mechanisch sowohl mit dem Getränkebereiter (insbesondere: dem Gehäuse desselben), als auch mit dem Trinkwassernetz verbindbar bzw. verbunden, um ein unabsichtliches Lösen des Festwasseranschlusses des Getränkebereiters vom Trinkwassernetz zu verhindern. Zur mechanischen Verbindung zwischen dem Festwasserkit und dem Gehäuse kann das Gehäuse eine zum mechanischen Anschluss des Festwasserkits komplementäre Aufnahme aufweisen, in/an der der mechanische Anschluss des Festwasserkits befestigt werden kann (insbesondere verschraubt, eingeklemmt oder eingeclipst werden kann).

Ebenfalls ist das Festwasserkit bevorzugt elektrisch mit dem Getränkebereiter verbindbar bzw. verbunden. Dies ermöglicht, dass der Getränkebereiter (insbesondere die Steuereinrichtung desselben) Funktionen des Festwasserkits steuert und/oder regelt, z. B. ein (Magnet)-Ventil und/oder einen Flussregler des Festwasserkits steuert, mit dessen/deren Hilfe der Wasserdurchströmungsquerschnitt besagter hydraulischer Verbindung, also die durch das Festwasserkit hindurchströmende Wassermenge pro Zeiteinheit eingestellt werden kann.

Weitere vorteilhafterweise realisierbare Merkmale lassen sich Anspruch 6 entnehmen.

Dabei reicht es auch, eines der beiden Elemente Ventil und Flussregler vorzusehen. Es kann auch ein bezüglich seines Öffnungsquerschnitts stufenlos verstellbares Ventil anstelle eines binären (also lediglich eine Öffnungsstellung und eine Schließstellung aufweisenden) Ventils samt Flussregler vorgesehen sein. Der Flussregler kann eine Blende umfassen oder sein.

Weitere vorteilhafterweise realisierbare Merkmale lassen sich den Ansprüchen 7 bis 9 entnehmen.

Es kann auch ein einzelner Sensor, der kombiniert als Präsenz- und Füllstandssensor ausgebildet ist, verwendet werden (vgl. nachfolgendes Ausführungsbeispiel): Als solcher Kombinationssensor ist ein kapazitiver Sensor denkbar, der z.B. eine Tankwand erkennt und/oder erkennt, ob Wasser dahinter ist oder nicht. Der Sensor kann analog oder digital drei verschiedene Messwerte ausgeben: 1. = kein Tank vorhanden, 2. = Tank vorhanden bzw. korrekt eingesetzt, aber kein Wasser (d.h. Tank leer oder Füllstand unter Minimum) und 3. = Tank vorhanden bzw. korrekt eingesetzt und Wasser ausreichend vorhanden. Bei Verwendung eines Einzelsensors kann ein Mikroschalter oder ein Magnet am Tank und ein Reedschalter oder Hallsenor die Tankpräsenz sensieren. Der Füllstand kann dann z.B. über einen kapazitiven Sensor, einen Schwimmerschalter, einen Ultraschallsensor oder Min/Max-Berührerelektroden erfasst werden.

Weitere vorteilhafterweise realisierbare Merkmale lassen sich Anspruch 10 entnehmen.

Der Verbindungssensor kann auch zusätzlich überprüfen, ob eine mechanische Verbindung (zwischen dem mechanischen Anschluss des Festwasserkits einerseits und der dazu komplementären Aufnahme am Gehäuse des Getränkebereiters andererseits) gegeben ist. Auf Basis von Signalen eines solchen Verbindungssensors kann mittels der Steuereinrichtung der Bezug von Trinkwasser aus dem Trinkwassernetz über das Festwasserkit und den Zulauf sicherheitshalber erst dann freigeschaltet werden, wenn nicht nur die hydraulische, sondern auch eine solche mechanische Verbindung gegeben ist.

Verschiedene Funktions- und/oder Steuerungsbeispiele, die vermittels der Steuereinrichtung und der vorbeschriebenen Sensoren sowie ggf. mittels geeigneter Programme im Speicher der Steuereinrichtung realisiert werden können, sind wie folgt.
1. Ist kein Verbindungsensor vorhanden, so wird bei Minimum-Erkennung des Füllstands immer das Festwasserkit angesteuert. Ist diese Minimum-Meldung nach einer Grenzzeit (z.B. 10 Sekunden) nicht weg, wird "Wassertank befüllen" an einem Display der Maschine angezeigt.
2. Umschaltung am Display: Im Gegensatz zu 1. kann die Meldung "Festwasserverbindung prüfen" ausgegeben werden.
3. Autoerkennung: Diese kann in unterschiedlich aufwendigen Varianten stattfinden. Nur eine Detektion der elektrischen Verbindung durch z.B. Ansteuern des Ventils und gleichzeitige Stromüberwachung oder zusätzliche Überwachung der Fluidverbindung durch einen Druckschalter in der Maschine, die den Wasserzulauf überwacht und den Wasserdruck sensiert. Die Überwachung der mechanischen Sicherung kann wiederum über einen Mikroschalter oder elektrischen Kontakt erfolgen.

Weitere Funktions- und/oder Steuerungsbeispiele, die vermittels der Steuereinrichtung und der vorbeschriebenen Sensoren sowie ggf. mittels geeigneter Programme im Speicher der Steuereinrichtung realisiert werden können, sind wie folgt.

Wird ein Präsenzsensor mit der Steuereinrichtung verbunden, so kann/können, wenn festgestellt wird, dass der Wassertank nicht im Gehäuse des Getränkebereiters vorhanden ist, der erste und/oder der zweite Betriebsmodus gesperrt werden.

Sieht man einen (oder auch zwei unterschiedliche) Füllstandssensor(en) vor, mit dessen/deren Hilfe Füllstände innerhalb des Wassertanks erfasst werden können, so können zwei Wasserstände definiert werden: Ein minimaler Wasserstand MIN und ein maximaler Wasserstand MAX innerhalb des Wassertanks. Wenn MIN erreicht oder unterschritten wird, so kann vermittels der Steuereinrichtung solange Wasser über den Zulauf nachgefüllt werden, bis im Tank MAX erreicht wird (z. B. kann die Steuereinrichtung ein angeschlossenes Festwasserkit entsprechend ansteuern). Alternativ dazu kann auch eine definierte Trinkwassermenge über den Zulauf nachgefüllt werden, die so bemessen wird, dass der Wasserstand innerhalb des Tanks immer unterhalb von MAX liegt. Ebenso ist es möglich, Trinkwasser nur dann aus dem Trinkwassernetz über den Zulauf nachzufüllen, wenn die Steuereinrichtung über den/die Füllstandssensor(en) feststellt, dass gerade im Getränkebereiter ein Getränk zubereitet wird, dass also momentan Wasser aus dem Wassertank entnommen wird. Der Wassertank kann also als befüllbarer Pufferspeicher dienen. Schließlich kann, wenn MAX überschritten wird, vermittels geeigneter Einrichtungen des Getränkebereiters (z. B. blinkende Anzeige in einem Display am Gehäuse oder Alarmton) ein Alarm ausgelöst werden und/oder ein weiteres Nachfüllen von Trinkwasser aus dem Trinkwassernetz vermittels der Steuereinrichtung solange gesperrt werden, bis der Wasserstand im Tank durch Entnahme von Wasser bzw. durch eine Getränkezubereitung auf einen definierten Bruchteil (z. B. 0.5 x MAX) von MAX abgesunken ist. Mehrere der vorgenannten Steuerungsmöglichkeiten können kumulativ realisiert sein.

Wird ein Verbindungssensor verwendet, so kann das Vorhandensein der Fluidverbindung bzw. ein korrektes Verbinden des Festwasserkits mit dem Getränkebereiter einerseits und dem Trinkwassernetz andererseits erkannt werden. Ist dies der Fall, und wird vom Präsenzsensor zusätzlich erkannt, dass der Wassertank im Gehäuse des Getränkebereiters vorhanden und korrekt positioniert ist, können vermittels der Steuereinrichtung sowohl der erste, als auch der zweite Betriebsmodus freigeschaltet werden.

Weitere vorteilhafterweise realisierbare Merkmale lassen sich dem Anspruch 11 entnehmen.

Vorzugsweise ist der Wassereinlauf im Gehäuse des Getränkebereiters oberhalb der Tankoberseite so ausgebildet, dass über ihn bei in das Gehäuse (bzw. eine Tankaufnahme desselben) eingesetztem Tank das Trinkwasser nicht entlang der Lotrechten, also schräg, ins Tankinnere eingeleitet wird. Der Wassereinlauf bzw. dessen Luftstrecke ist dabei in der Regel oberhalb der maximalen Füllstandshöhe MAX im Tank positioniert. Unter einem schrägen Einleiten des einfließenden Trinkwassers gegen die Innenwandung wird verstanden, dass das einfließende Trinkwasser die Luftstrecke so durchfällt, dass es (bzw. die Tangente an den Wasserstrahl) unter einem Schrägwinkel α < 45°, bevorzugt < 20°, bevorzugt < 10° auf besagte Innenwandung auftrifft (bzw. diese schneidet).

Weitere vorteilhafterweise realisierbare Merkmale lassen sich den Ansprüchen 12 und 13 entnehmen.

Gemäß dieser Ansprüche ist die Tropfschale bevorzugt ein Teil des Gehäuses des Getränkebereiters und aus diesem Gehäuse zum Ausleeren des in der Tropfschale befindlichen Abwassers entnehmbar. Eine solche Tropfschale muss aber nicht vorgesehen sein, wenn der Überlauf in den separaten Fluidablauf des Getränkebereiters führt (dieser separate Fluidablauf ist dann zu einem definierten Wegleiten von übergelaufenem Wasser aus dem Getränkebereiter ausgebildet und angeordnet).

An der Tropfschale kann ein zusätzlicher Füllstandsensor vorgesehen sein, der den Füllstand in der Tropfschale bestimmt und, falls die Schale voll oder nahezu voll ist, ein Alarmsignal oder (z. B. an einem Display des Getränkebereiters) einen Hinweis "Tropfschale voll" ausgibt (z. B. vermittels der Steuereinrichtung) und/oder der (z. B. vermittels der Steuereinrichtung) die weitere Zubereitung von Getränken durch den Getränkebereiter sperrt, wenn die Tropfschale überzulaufen droht bzw. über einen definierten maximalen Füllstand hinaus gefüllt ist.

Zusätzlich oder alternativ kann die Tropfschale selbst einen Fluidablauf aufweisen, über den in der Tropfschale befindliches Abwasser kontinuierlich (oder beim Erreichen des maximalen Füllstandes in der Tropfschale) aus der Tropfschale (und somit aus dem Getränkebereiter) abgeleitet wird.

Ein erfindungsgemäßes Festwasserkit ist in Anspruch 14 beschrieben.

Eine erfindungsgemäße Kaffeemaschine kann somit vom Grundaufbau her eine Tankmaschine sein. Soll die Maschine an einem Festwasseranschluss betrieben werden, kann der Wassertank über ein außerhalb der Maschine befindliches Festwasserkit befüllt werden. Das Festwasserkit kann entweder direkt an einem Eckventil an das Leitungsnetz (Trinkwassernetz) einer Hauswasserversorgung angeschlossen werden oder auch über einen zwischengeschalteten Wasserfilter.

Standardmäßig können in der Kaffeemaschine Schnittstellen vorbereitet sein für die elektrische und die hydraulische Verbindung mit dem Festwasserkit. Der elektrische Anschluss kann die Steuerung der Maschine mit einem Zulaufventil im Kit verbinden. Durch die elektrische Verbindung kann die Maschine auch automatisch erkennen, ob ein Festwasserkit angeschlossen ist oder nicht. Alternativ kann auch ein manuelles Auswählen und Einstellen über eine/die Benutzerschnittstelle der Maschine ermöglicht werden.

Der hydraulische Anschluss kann für eine Verbindung zwischen dem Zulaufventil (also dem in dem Festwasserkit angeordneten Ventil) und dem sich im Gehäuse der Maschine befindlichen Tankeinlauf sorgen. Diese hydraulische Verbindung kann über eine Steckverbindung erfolgen. Eine solche Steckverbindung kann zusätzlich mechanisch (beispielsweise über eine Schraubverbindung) gesichert werden, was eine ungewollte Trennung des Gehäuses der Maschine und des Festwasserkits verhindert: Eine solche Trennung könnte beispielsweise durch Wegrücken der Kaffeemaschine oder durch Stolpern über einen Zulaufschlauch passieren.

Die Anwesenheit des Wassertanks in der Kaffeemaschine kann mit einem Sensor (Präsenzsensor) überwacht werden. Damit kann verhindert werden, dass Wasser nachgefüllt wird, wenn sich kein Tank in der Maschine befindet. Mit einem Füllstandssensor (oder einem kombinierten Präsenz- und Füllstandsensor) kann auch der Füllstand im Wassertank überwacht werden. Es ist auch denkbar, dass je ein Sensor für die Präsenzüberwachung und für die Füllstandsüberwachung verwendet wird. Sinkt der Wasserstand unter einen Minimalwert, kann der Füllstandsensor ein Signal an die Steuereinrichtung übermitteln. Der Füllstandsensor kann so z. B. zum Erkennen der Restmenge (Leererkennung) dienen, bei der ein bereits ausgelöstes Produkt noch sicher hergestellt und ausgegeben werden kann. Wird diese Restmenge unterschritten, so kann die Maschine den Benutzer auffordern, den Tank zu befüllen (oder programmgesteuert im zweiten Betriebsmodus automatisch dafür sorgen, dass Trinkwasser aus dem Trinkwassernetz in den Tank eingeleitet wird). Bei angeschlossenem Festwasserkit kann ein solches Signal ein zeitgesteuertes Befüllen des Tanks auslösen. Die Steuerung kann daraufhin für eine bestimmte Zeit das Zulaufventil im Festwasserkit öffnen. Damit die in dieser Zeit in den Tank eingeflossene Wassermenge nicht zu sehr vom Leitungsdruck im Trinkwassernetz abhängig ist, kann sich im Zulaufventil des Festwasserkits bzw. im Festwasserkit ein Flussregler befinden. Dieser hält den Fluss über einen größeren Druckbereich relativ konstant.

Der Flussregler kann so dimensioniert sein, dass in jedem Fall schneller Wasser aus dem Trinkwassernetz in den Tank eingeleitet wird, als von der Maschine zum Getränkezubereiten entnommen werden kann. In diesem Fall reicht es aus, wenn nur dann Wasser nachgefüllt wird, wenn auch gleichzeitig eine Entnahme erfolgt. Dies hat den Vorteil, dass die Fließgeräusche beim Befüllen des Tanks vom Geräusch einer Kaffeemühle der Kaffeemaschine und der Wasserpumpe der Kaffeemaschine überlagert werden und somit kaum mehr vom Benutzer wahrgenommen werden (bevorzugte Ausführungsform). Selbstverständlich ist es aber auch möglich, zu jedem beliebigen Zeitpunkt Wasser nachzufüllen.

Sollte die Wasserversorgung über das Trinkwassernetz gestört werden, z. B. durch ein nicht geöffnetes Eckventil, dann kann dies die Maschine daran erkennen, dass der Füllstandsensor nach dem Öffnen des Zulaufventils im Festwasserkit nicht nach kurzer Zeit wieder das Überschreiten der MIN-Marke im Wassertank meldet. Eine entsprechende Meldung kann an einer Anzeige der Maschine angezeigt werden.

Das Befüllen des Wassertanks im zweiten Betriebsmodus, also mit Trinkwasser aus dem Trinkwassernetz, kann über einen Wassereinlauf erfolgen, der sich oberhalb des Tanks befindet. Zwischen diesem Einlauf und dem Tank kann aus Hygienegründen eine Luftstrecke vorhanden sein, die der einlaufende Wasserstrahl frei überbrücken muss. Vorzugsweise tritt dabei der Wasserstrahl leicht schräg ins Tankinnere ein, so dass er unter einem flachen Winkel gegen eine Innenwandung (Seitenwand) des Wassertanks läuft und von dort nach unten bis zur Wasseroberfläche des bereits im Tank befindlichen Wassers. Dies hat den Vorteil, dass deutlich weniger Geräusche und ein deutlich verringertes Spritzen verursacht werden, als wenn der Wasserstrahl direkt (z. B. lotrecht) auf die Wasseroberfläche trifft.

Sollte es aufgrund von Defekten oder Fehlfunktionen zu einem Überlaufen des Tanks kommen, so kann das Wasser beim Vorsehen des Überlaufs des Wassertanks über einen ausreichend groß dimensionierten Querschnitt in die Tropfschale ablaufen. Die Tropfschale kann ihrerseits über einen Füllstandsensor überwacht werden (oder auch an einen Ablauf angeschlossen sein). Zum Ausbilden des Überlaufs kann der Tank in seinem vorderen Bereich (Bereich seines Handgriffs) so ausgebildet sein, dass das Wasser gezielt an der Tankvorderwand nach unten geleitet wird (sichtbar für den Benutzer). Alternativ kann der Überlauf auch an einer beliebigen anderen Stelle des Tanks angebracht werden und das Wasser kann in die Tankhülle fließen, aus der es nach vorne in die Tropfschale oder in einen separaten Ablauf abgeleitet werden kann.

Die vorliegende Erfindung bietet insbesondere den Vorteil, dass die Wasserzufuhr für die Getränkezubereitung auf unterschiedliche Art und Weise erfolgen kann. Ein einfaches Umrüsten einer erfindungsgemäßen Maschine von einer Tankmaschine in eine Festwassermaschine und umgekehrt ist möglich, wenn in der Maschine standardmäßig lediglich (z. B. am Gehäuse derselben) Schnittstellen für die elektrische, hydraulische und mechanische Verbindung mit dem beschriebenen Festwasserkit vorgesehen sind. Damit muss die Maschine zum Umrüsten nicht einmal geöffnet werden. Zudem hat die Maschine den Vorteil einer leisen Arbeitsweise.

Insbesondere hat die vorliegende Erfindung (gegenüber Maschinen mit fest eingebauten, also nicht entnehmbaren Tanks) auch den Vorteil, dass durch das manuelle Entnehmen des Tanks Kalkablagerungen, die sich über die Zeit bilden, einfach und zuverlässig entfernt werden können. Bei fehlender Entnahmemöglichkeit für den Tank können solche Ablagerungen nur schlecht beseitigt werden, was ein erhebliches Risiko darstellen kann: Durch die Bevorratung des Wassers im Tank lagern sich Keime an den Oberflächen an, die mit der Zeit eine Schleimschicht bilden, den sogenannten Biofilm. Dieser Biofilm macht sich eventuell in Form eines unangenehmen Geruches bemerkbar und kann auch gesundheitsschädlich sein. Eine zuverlässige und gründliche mechanische und chemische Reinigung eines Tanks ist im eingebauten Zustand aber nur schwer realisierbar. Kann der Tank, wie bei der vorliegenden Erfindung, jedoch entnommen werden, so ist eine manuelle Reinigung aller Ecken und Kanten (z.B. auch durch eine Spülmaschine) möglich.

Der Umbau bzw. das Umrüsten vom Zustand einer Tankmaschine in den Zustand einer Festwassermaschine (bei der die Tankbefüllung dann mittels der beiden bereits beschriebenen Betriebsmodi erfolgen kann) kann durch folgende Schritte erfolgen.
- Herstellen der elektrischen, mechanischen und hydraulichen Verbindung zwischen Maschine und Festwasserkit (Steckverbindungen; Schnittstellen an der Rückseite der Maschine können genutzt werden).
- Festwasserkit mit dem bauseitigen Wasseranschluss verbinden, entweder direkt am Eckventil oder über einen zwischengeschalteten Wasserfilter (Kalkfilter).
- Umstellen der Maschinensoftware (Programme der Steuereinrichtung) von Tank- auf Festwassermaschine über das Bedienermenü an der Benutzerschnittstelle der Maschine. Theoretisch ist auch ein selbsttätiges Erkennen eines angeschlossenen Festwasserkits durch die Steuereinrichtung bzw. deren Software möglich.

Die Umstellung zurück zur Tankmaschine kann in umgekehrter Reihenfolge erfolgen. Dabei ist eine Trennung vom Festwasser bzw. Trinkwassernetz nicht zwingend notwendig. Es reicht aus, die elektrische, hydraulische und mechanische Verbindung an der Maschine zu trennen und aus Sicherheitsgründen das Eckventil und das Absperrventil zu schließen.

Nachfolgend wird ein Ausführungsbeispiel beschrieben anhand einer Kaffeemaschine als Getränkebereiter, bei der ein externes Festwasserkit (als Teil des Zulaufs der Kaffeemaschine) verwendet wird. Dabei zeigen:
Figur 1
   eine dreidimensionale Aufsicht auf die Vorderseite der Kaffeemaschine 1 in einem Zustand Z0, in dem die Maschine 1 nicht über den Zulauf 3 mit dem Trinkwassernetz T verbunden ist.
Figur 2
   eine entsprechende Aufsicht (jedoch auf die Rückseite der Maschine) im Zustand Z1, in dem die Maschine 1 über den Zulauf 3 mit dem Trinkwassernetz T verbunden ist.
Figur 3
   eine Aufsicht auf die Anschlüsse auf der Rückseite des Gehäuses 5 der Maschine 1.
Figur 4
   eine Außenansicht des Festwasserkits 7.
Figur 5
   einen Einblick in das Gehäuse 72 des Festwasserkits 7 sowie auf die darin befindlichen Bauteile des Festwasserkits.
Figur 6
   eine Schnittansicht durch den Wassertank 2 der Maschine 1, die den Aufbau des Wassereinlaufs 16 zeigt.
Figur 7
   eine Schrägansicht von vorne (benutzerzugewandte Seite der Maschine) auf den Wassertank 2, die den Überlauf 20 zeigt.

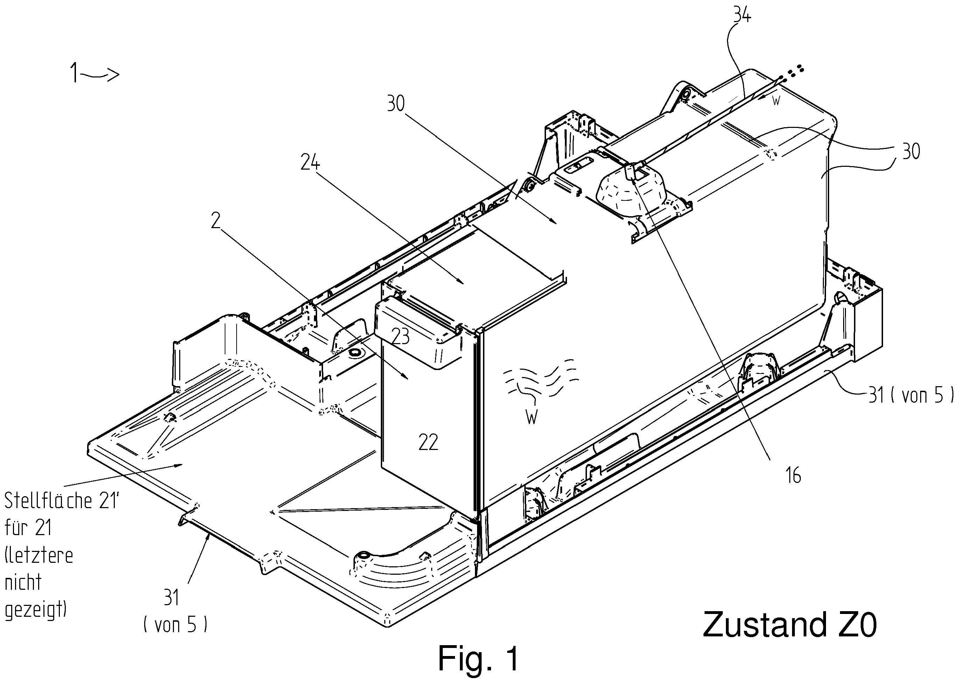

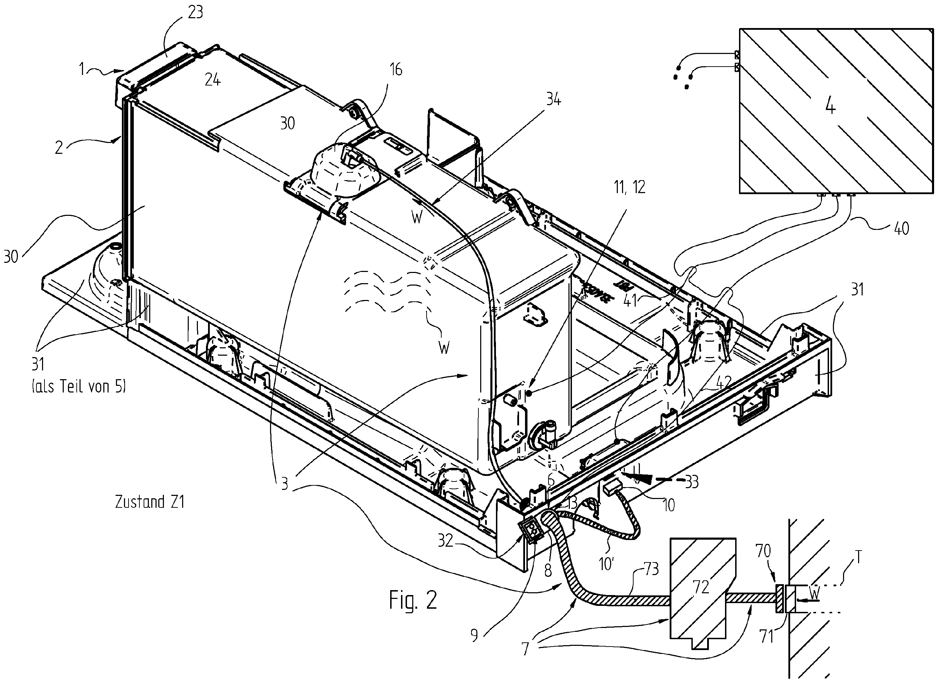

Figur 1 zeigt eine Schrägansicht auf eine erfindungsgemäße elektrisch betriebene Kaffeemaschine 1, von der lediglich die für die Erfindung wesentlichen Bauteile, nämlich unter anderem eine Bodengruppe 31 (die einen Teil des Gehäuses 5 der Kaffeemaschine 1 darstellt) und eine auf einem Abschnitt der Bodengruppe 31 fixierte und auf der letzteren angeordnete Tankaufnahme 30, sichtbar sind. Die Tankaufnahme 30 ist als Hohlform so ausgebildet, dass von der dem Benutzer (nicht sichtbar) zugewandten Vorderseite der Kaffeemaschine 1 (links unten in der Figur) in horizontaler Richtung der Wassertank 2 in die Tankaufnahme 30 zur Rückseite der Maschine 1 hin einschiebbar ist. Figur 1 zeigt einen Zustand, in dem der Tank 2 in die Tankaufnahme 30 vollständig eingeschoben ist (evtl. im Tank befindliches Wasser ist mit dem Bezugszeichen W angedeutet). Wie ein Vergleich mit Figur 2 zeigt, zeigt Figur 1 darüber hinaus einen Zustand Z0, in dem die Kaffeemaschine 1 nicht über einen Zulauf 3 (der teilweise Bauteile der Kaffeemaschine 1 und teilweise Bauteile eines kaffeemaschinenexternen, an die Kaffeemaschine 1 anschließbaren Festwasserkits 7 umfasst) mit dem Trinkwassernetz T eines Gebäudes, in dem die Kaffeemaschine 1 positioniert ist, verbunden ist.

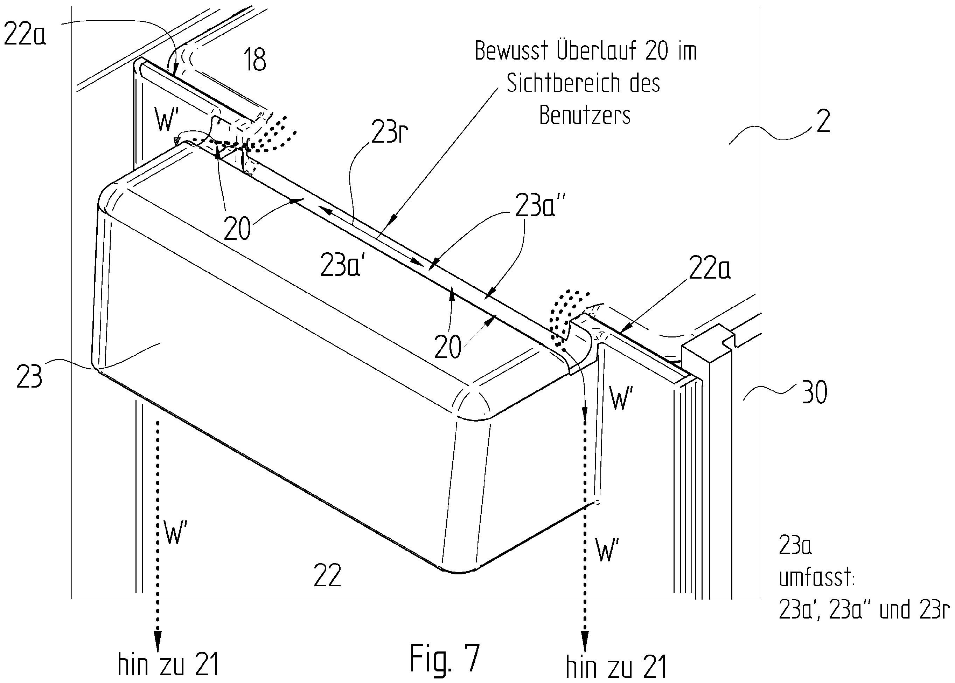

An der dem Benutzer zugewandten Vorderseite 22 des Wassertanks 2 ist am oberen, also dem bodengruppenabgewandten Ende ein zum Benutzer hin überkragender Handgriff 23 des Tanks 2 ausgebildet. Zwischen dieser Vorderseite 22 und der Vorderseite der Bodengruppe 31 ist eine Stellfläche 21' gezeigt, auf der eine Tropfschale 21 der Maschine 1 abschnittsweise unterhalb des Handgriffs 23 so positioniert werden kann, dass über den Handgriff 23 überlaufendes Wasser W aus dem Tank 2 an der Vorderseite 22 bzw. der Vorderfront des Tanks 2 herablaufen und in die Tropfschale 21 laufen kann (vgl. dazu auch Figur 7).

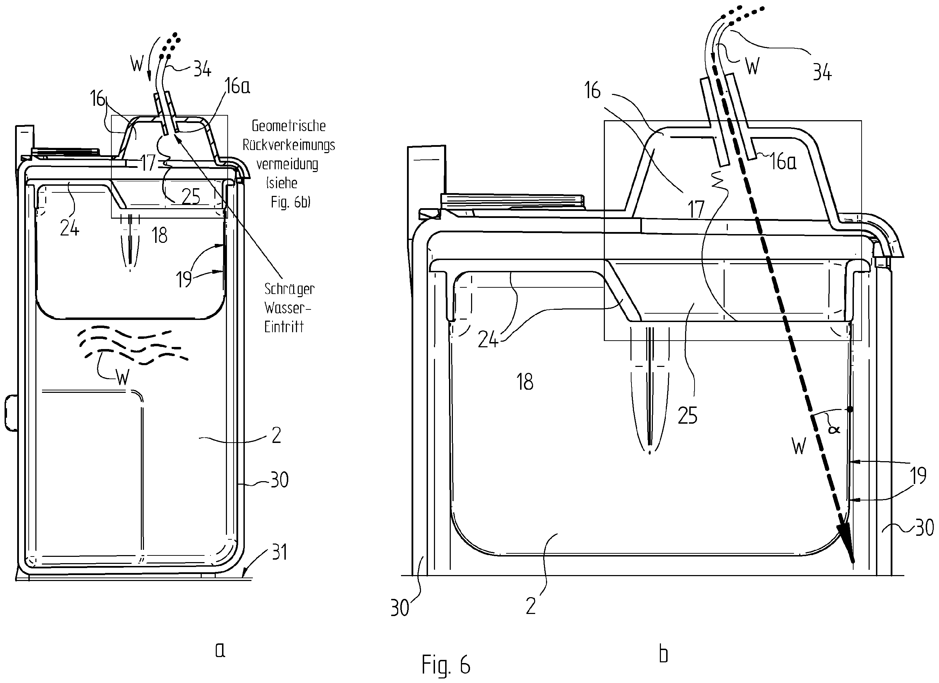

24 bezeichnet einen auf der Oberseite des Tanks 2 aufklappbar und/oder abnehmbar ausgebildeten Deckel des Tanks 2, der sich von der Vorderseite der Maschine 1 zu deren Rückseite rechts oben in Figur 1 über die gesamte Tanklänge erstreckt, wobei der Deckel 24 in Tanklängsrichtung bzw. in Richtung von der Vorderseite der Maschine 1 zur Rückseite der Maschine 1 gesehen mittig eine zum Wassereinlauf 16, vgl. Figur 6, korrespondierende Öffnung 25 aufweist und hier nur abschnittsweise an der Vorderseite des Tanks 2, also nicht auf Höhe des Wassereinlaufs 16 und auch nicht an der Rückseite des Tanks 2 bzw. der Maschine 1, sichtbar ist. Der längs des gesamten Tankinnenvolumens ausgebildete aufklappbare Deckel 24, der in Figur 1 im zugeklappten Zustand gezeigt ist, dient im aus dem Gehäuse 5 der Maschine 1 herausgezogenen Zustand des Tanks 2 dazu, dass bei geöffnetem Deckel 24 der Tank 2 abseits der Maschine 1 manuell von einem Benutzer über ein externes Gefäß wie z. B. einen Messbecher (nicht gezeigt) mit Wasser gefüllt werden kann (erster Betriebsmodus der Maschine 1). Im eingeschobenen Zustand des Tanks 2 ist der Deckel 24 wie in Figur 1 gezeigt zwangsweise geschlossen (anders lässt sich der Tank 2 nicht in die Tankaufnahme 30 vollständig einschieben), so dass in der in Figur 1 gezeigten Position des Tanks 2 lediglich ein Befüllen des Tanks 2 durch Zuleiten von Trinkwasser (unter anderem über die Wasserleitung 34 innerhalb des Gehäuses 5, vgl. den Pfeil sowie auch Figur 2) in den Wassereinlauf 16 und von dort über die in Figur 1 nicht sichtbare, unterhalb des Wassereinlaufs 16 angeordnete Öffnung 25 im Tankdeckel 24 ins Tankinnere ermöglicht ist (zweiter Betriebsmodus der Maschine 1). Es ist aber auch ausreichend, einfach nur einen abnehmbaren Deckel zu verwenden (nicht gezeigt): Falls dieser dann vergessen wird, wird dies nicht erkannt.

Die Schrägaufsicht von hinten auf die Maschine 1 aus Figur 2 zeigt einen Zustand Z1, in dem der Getränkebereiter über den Bauteile des Getränkebereiters sowie Bauteile des getränkebereiterexternen Festwasserkits 7 umfassenden Zulauf 3 mit Wasser W aus dem Trinkwassernetz T versorgt werden kann. Dabei sind (vgl. auch nachfolgend) die Bauteile 25, 17, 16, 34 und 6 als Teile des bzw. innerhalb des Gehäuses 5 Bauteile des Zulaufs 3, die zur Maschine 1 gehören. Diejenigen Bauteile des Zulaufs 3, die nicht zur Maschine 1 gehören, sondern zum externen, die Maschine unter anderem hydraulisch mit dem Trinkwassernetz T verbindenden Festwasserkit 7 sind die Bauteile 8, 73, 74 und 70 (vgl. nachfolgend). Der hydraulische Anschluss 70 des Kits 7 ist im Zustand Z1 mechanisch an einem komplementären hydraulischen Anschluss 71 des Trinkwassernetzes T fixiert. Wasser W aus dem Trinkwassernetz T fließt somit über die hydraulische Steckverbindung 70, 71 in das Festwasserkit 7, von dort über die hydraulische Steckverbindung 6, 8 in die Maschine 1 bzw. in das Gehäuse 5 derselben und innerhalb des Gehäuses 5 zunächst über den hydraulischen Anschluss 6 in die gehäuseinnenliegende Wasserleitung 34 zum Wassereinlauf 16 (die Wasserleitung 34 ist mit dem Wassereinlauf 16 hydraulisch verbunden bzw. an letzterem fixiert). Über die Luftstrecke 17 des Wassereinlaufs 16 (vgl. Figur 6) - der oberhalb des Tanks 2 positionierte Wassereinlauf 16 kann als austauschbares Bauteil der Tankaufnahme 30 des Gehäuses 5 der Maschine 1 angesehen werden - und die Öffnung 25 im Deckel 24 fließt das Wasser W schließlich ins Innere des Tanks 2, vgl. Figur 6.

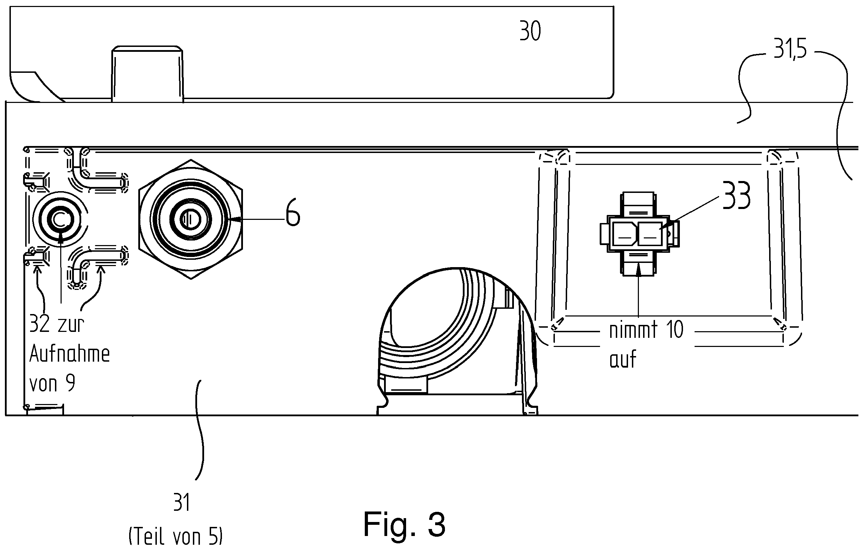

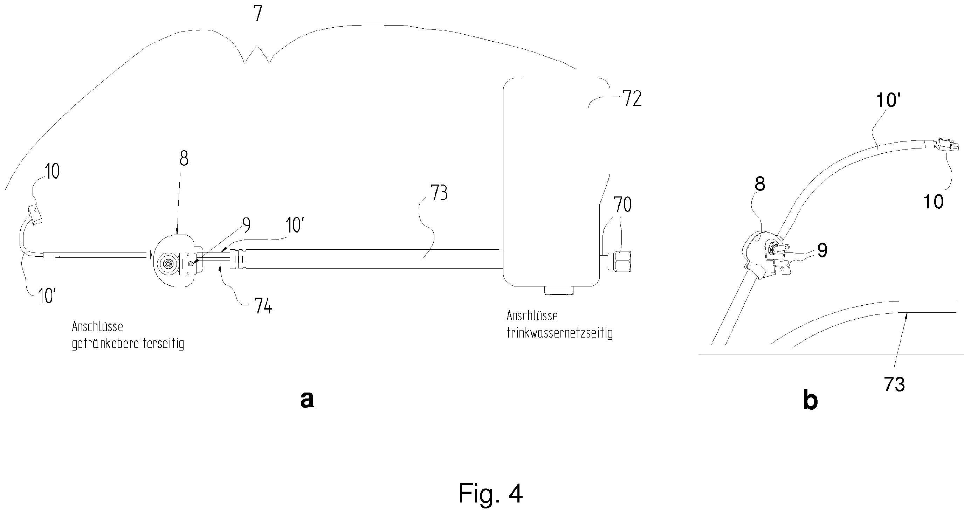

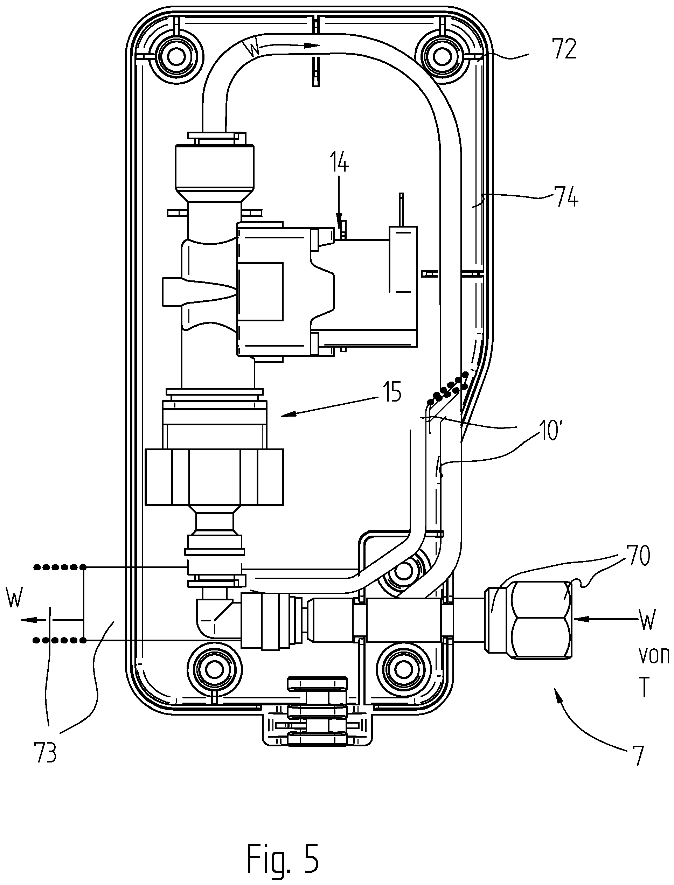

Figur 2 zeigt die Maschine 1, das Kit 7 und das Wassernetz T im vollständig, also sowohl hydraulisch, als auch elektrisch, als auch mechanisch verbundenen Zustand und mit der folgenden Sensorik sowie den folgenden Steuerungsmöglichkeiten (zu den Verbindungen bzw. Anschlüssen vgl. auch Figuren 3 und 4): Innerhalb des Gehäuses 5 ist eine mit einem Datenspeicher versehene, als Mikrocontroller ausgebildete Steuereinrichtung 4 vorgesehen, mit der die Maschine 1 die bereits beschriebenen Betriebsmoden ebenso steuert, wie das angeschlossene Festwasserkit 7. Dazu zieht die Steuereinrichtung 4 die über die bidirektionalen Daten- und Steuerleitungen 41 und 42 von den Sensoren 11, 12 und 13 übermittelten Messwerte heran (und stellt ggf. Parameter besagter Sensoren über besagte bidirektionale Leitungen zur Steuerung der Sensoren ein) und nutzt zudem die vom Magnetventil 14 und vom Flussregler 15 des Festwasserkits 7 (vgl. Figur 5) über die ebenfalls bidirektionale Daten- und Steuerleitung 10' und den Stecker 10 übermittelten momentanen Einstellungsparameter des Ventils 14 und des Flussreglers 15. Über die Leitung 10' können auch Steuersignale von der Steuereinrichtung 4 an das Ventil 14 und den Flussregler 15 zum Einstellen des gewünschten Wasserdurchflusses durch das Festwasserkit 7 übermittelt werden. Zudem dient die elektrische Leitung 10' der Stromversorgung des Festwasserkits durch die Maschine 1 über den Stecker 10 und die Buchse 33.

Die Steuereinrichtung 4 ist zudem über die bidirektionale Daten- und Steuerleitung 40 mit einer als Teil des Gehäuses 5 ausgebildeten Anschlussbuchse 33 verbunden. In diese Anschlussbuchse 33 ist der Stecker 10 des Kits 7 eingesteckt, der über die Leitung 10' elektrisch mit dem Ventil 14 und dem Flussregler 15 des Kits 7 verbunden ist (Figuren 4 und 5).

Ebenso ist die Steuereinrichtung 4 über die Leitung 41 mit dem Kombinationssensor 11, 12 elektrisch verbunden, wobei letzterer einen Präsenzsensor 11 und einen Füllstandsensor 12 umfasst. Mit dem Präsenzsensor 11 ist feststellbar, ob der Tank 2 korrekt in der Aufnahme 30, also innerhalb des Gehäuses 5 der Maschine 1 positioniert ist. Mit dem Füllstandsensor 12 ist die momentane Füllstandshöhe an Wasser W innerhalb des Tanks 2 ermittelbar (also insbesondere, ob der maximale Füllstand MAX erreicht ist oder überschritten wird und ob der minimale Füllstand MIN erreicht ist oder unterschritten wird). Schließlich ist die Steuereinrichtung 4 über die Leitung 42 mit dem Verbindungssensor 13 elektrisch verbunden. Während der Kombinationssensor 11, 12 an der Tankrückseite positioniert ist, ist der Sensor 13 ein kombinierter Druck- und Leitfähigkeitssensor, der an der Maschinenrückseite so positioniert ist, dass lediglich beim vollständigen, fluiddichten Schließen der hydraulischen Verbindung 6, 8 auf diesen Sensor ein Druck ausgeübt wird. Zudem sind die Maschine 1, das Kit 7 und der hydraulische Anschluss 71 des Trinkwassernetzes T geeignet so ausgebildet, dass der Sensor 13 lediglich dann, wenn sowohl die hydraulische Verbindung 6, 8 zwischen Maschine 1 und Kit 7 als auch die hydraulische Verbindung 70, 71 zwischen Kit 7 und Netz T korrekt geschlossen sind, elektrisch gesehen an Masse anliegt. Somit kann von der Steuereinrichtung 4 vermittels der Leitung 42 und des Sensors 13 geprüft werden, ob die Fluidverbindung zwischen dem hydraulischen Anschluss 6 des Gehäuses 5 einerseits und dem hydraulischen Anschluss 71 des Gebäudes andererseits vollständig geschlossen ist. Eine solche Dichtigkeitsüberwachung muss aber nicht vorgesehen sein. So kann z.B. auch nur eine Überwachung des Nachfüllens (d.h. Überwachung, ob bestimmte Füllstände in vorgegebenen Zeiten erreicht werden) erfolgen. Beispiel: Verschwindet das MIN Signal beim Füllen nicht nach einer vorgegebenen Zeit, so wird ein Fehler- und/oder Alarmsignal ausgegeben.

Die Bauteile 9 und 32 stellen eine mechanische Verbindung dar, mit deren Hilfe das Kit 7 mechanisch am Gehäuse 5 bzw. der Bodengruppe 31 desselben fixiert werden kann. Siehe dazu auch Figur 3: 32 stellt eine mechanische Gehäuseaufnahme als Bauteil des Gehäuses 5 dar, die komplementär zum mechanischen Anschluss 9 ausgebildet ist, der ein Bauteil des Festwasserkits 7 ist (vgl. Figur 4), über das 9 das maschinenseitige bzw. gehäuseseitige Ende des Kits 7 in die Gehäuseaufnahme 32 eingeclipst oder angeschraubt und somit am Gehäuse 5 fixiert werden kann.

Figur 3 zeigt zudem den hydraulischen Anschluss 6 des Gehäuses 5 (der zur formschlüssigen, abdichtenden Aufnahme des komplementär dazu ausgebildeten hydraulischen Anschlusses 8 des Kits 7 ausgeformt ist) und die elektrische Anschlussbuchse 33 im Gehäuse 5 bzw. in dessen Bodengruppe 31, die zum formschlüssigen Aufnehmen des komplementär dazu ausgebildeten Steckers 10 des Kits 7 und zum Herstellen der elektrischen Verbindung zwischen der Maschine 1 bzw. deren Steuereinrichtung 4 und dem Kit 7 (bzw. den darin zu steuernden Bauteilen 14 und 15) ausgebildet ist.

Figuren 4 und 5 zeigen den Aufbau des externen Festwasserkits 7 im Detail. Die im Gehäuse 72 des Kits 7 angeordneten Bauteile 14 und 15 sind zum Einstellen der pro Zeiteinheit durch das Kit 7 (also vom gebäudeseitigen hydraulischen Anschluss 70 des Kits 7 zum maschinenseitigen hydraulischen Anschluss 8 des Kits 7) hindurchfließenden Menge an Trinkwasser W ausgebildet. 14 ist ein binäres Magnetventil, das magnetgeschaltet lediglich die beiden Stellungen "offen" und "zu" annehmen kann. Die Energieversorgung des Ventils 14 erfolgt über die Daten-, Steuer- und Stromleitung 10' nach Anschluss derselben über den Stecker 10 und die Buchse 33 an die Maschine 1 (die Bauteile 33, 10 und 10' sind dazu geeignet ausgebildet). Der grundsätzliche Aufbau eines solchen binären Ventils 14 ist dem Fachmann bekannt. Um die Durchflussmenge pro Zeiteinheit bei geöffnetem Magnetventil 14 einzustellen, ist daher stromaufwärts des Ventils 14 der Flussregler in Form einer hinsichtlich ihres Öffnungsgrades stufenlos variierbaren (oder auch einer austauschbaren) Blende 15 vorgesehen.

Das aus dem Trinkwassernetz T bzw. dessen hydraulischem Anschluss 71 über den komplementären Anschluss 70 des Kits 7 eintretende Trinkwasser W fließt somit über die Blende 15 durch das Ventil 14 in den stromabwärts des Ventils 14 im Gehäuse 72 positionierten Teflonschlauch 74, der das Gehäuse 72 innerhalb des flexiblen Gewebeschlauches 73 (alternativ auch als Leitungsaufnahme bezeichnet) verlässt. Innerhalb der Leitungsaufnahme 73 sind sowohl der Teflonschlauch bzw. die entsprechende hydraulische Leitung 74 für die Trinkwasserzufuhr, als auch die als Energieversorgung ebenso wie als bidirektionale Daten- und Steuerleitung dienende elektrische Leitung 10' vom Gehäuse 72 hin zum getränkebereiterseitigen Ende des Kits 7 geführt.

Das getränkebereiterseitige Ende der Leitung 74 ist fluiddicht mit dem hydraulischen Anschluss 8 des Kits 7 verbunden, während die Leitung 10' in den Stecker 10 mündet. Wie Figuren 4a und 4b zeigen, mündet dazu der Gewebeschlauch 73 mit den darin befindlichen Leitungen 74 (hydraulisch) und 10' (elektrisch) in ein Kunststoffgehäuse des hydraulischen Anschlusses 8. Über das Kunststoffgehäuse des Anschlusses 8 ist letzterer fluiddicht mit dem komplementären hydraulischen Anschluss 6 des Gehäuses 5 verbindbar. Auf der der Einmündung des Gewebeschlauchs 73 gegenüberliegenden Seite des Kunststoffgehäuses verlässt die elektrische Leitung 10' das Kunststoffgehäuse des hydraulischen Anschlusses 8, um am getränkebereiterseitigen Ende in den Stecker 10 zu münden.

Figuren 6a und 6b (letztere als Vergrößerung) zeigen einen Querschnitt senkrecht zur Tanklängsachse und auf Höhe des Wassereinlaufs 16 durch den Wassertank 2. Der Wassereinlauf 16 in der Oberseite der Tankaufnahme 30 weist einen zur tankabgewandten Oberseite der Maschine 1 hin auskragenden glockenförmigen Abschnitt auf, in dessen Oberseite die innerhalb des Gehäuses zum hydraulischen Anschluss 6 führende Wasserleitung 34 einmündet. Korrespondierend zum Wassereinlauf 16 bzw. dessen glockenförmigen Abschnitts (und somit auch korrespondierend zur Einmündung der Leitung 34) ist im Deckel 24 des Tanks 2 eine Öffnung 25 ausgebildet, wobei der Öffnungsquerschnitt dieser Öffnung in etwa mit dem lichten Innenquerschnitt der glockenförmigen Ausbuchtung des Wassereinlaufs 16 übereinstimmt. Über die Leitung 34 und den Einlauf 16 in der Tankaufnahme 30 nach unten (also zur Bodengruppe 31) hin fließendes Wasser W durchfällt nach dem Verlassen des Mündungsbereichs 16a des Wassereinlaufs 16 somit eine Luftstrecke 17 des Einlaufs 16, wobei diese Luftstrecke 17 zur Bodengruppe 31 hin gesehen durch die Öffnung 25 ins Innere des Tanks 2 hineinreicht. Die Mündung 16a der Leitung 34 bzw. des Einlaufs 16 zur Öffnung 25 bzw. zum Tankinneren hin ist dabei so ausgebildet und ausgerichtet, dass das die Luftstrecke 17 durchfallende, einfließende Wasser W entlang der Luftstrecke 17 nicht lotrecht in den Tank 2 einfließt, sondern schräg (gestrichelter Pfeil in Fig. 6b). Mit anderen Worten tritt das unter Druck eingeleitete Wasser W aus der Mündung 16a so aus, dass es nach Durchfallen der Öffnung 25 in einen oberen Bereich 18 des Wassertankinneren unter einem kleinen Schrägwinkel α von hier ca. 15° gegen eine Seitenwand bzw. Innenwandung 19 des Tanks 2 trifft.

Das Durchfallen der Luftstrecke 17 verhindert somit sicher geometrisch jegliche Rückverkeimung von aus dem Trinkwassernetz T zugeleitetem Wasser durch eventuell in der Wasserfüllung innerhalb des Tanks auftretende Keime. Der Aufprall des einfließenden Wassers unter einem kleinen Schrägwinkel α auf der Seitenwandung 19 (streifender Einfall des Wassers) im oberen Bereich 18 des Tankinneren verhindert eine unangenehme Geräuschentwicklung fast bis zum vollständigen Füllen des Tanks 2 mit Trinkwasser W, die ansonsten auftreten würde, wenn das einfließende Wasser lotrecht nach unten fiele bzw. auf die Oberfläche der bereits im Tank 2 befindlichen Wasseransammlung träfe. (Die Aufprallfläche kann aber auch oberhalb des MAX Füllstands liegen.)

Figur 7 zeigt (vgl. Figur 1) schließlich in vergrößerter Ansicht die dem Benutzer der Maschine 1 zugewandte Vorderseite 22 des Wassertanks 2. Am oberen Ende der Vorderseite 22 kragt ein Handgriff 23 vom Tank 2 in Richtung zum Benutzer (nicht gezeigt) hin wie folgt über: Die Oberseite 23a des Handgriffs 23 ist als ebene, horizontal ausgerichtete Fläche ausgeformt und positioniert. Lotrecht zur Bodengruppe 31 hin gesehen ist diese Oberseite 23a geringfügig unterhalb der ebenfalls horizontal verlaufenden Oberkante 22a der Vorderseite 22 des Tanks 2 positioniert. Horizontal und senkrecht zur Tanklängsachse (die horizontal von der Vorderseite der Maschine zu deren Rückseite verläuft), also längs der quer zur Tanklängsachse und ebenfalls horizontal verlaufenden Längsachse des Griffs 23 gesehen, weist die Oberkante 22a der Wassertankvorderseite 22 eine Unterbrechung auf bzw. ist die Oberkante 22a in der Lotrechten gesehen auf das Höhenniveau der Oberseite 23a des Griffs 23 abgesenkt.

Diese Unterbrechung bildet somit einen Überlauf 20 aus: Steigt das Füllniveau im Wassertank 2 bis auf Höhe der Oberseite 23a an, so beginnt bei weiter steigendem Wasserspiegel Wasser aus diesem Überlauf 20 über die Griffoberseite 23a überzulaufen und an der Vorderseite 22 des Tanks in Richtung zur Bodengruppe 31 herunterzulaufen (Wasser W'). Da derjenige Abschnitt 23a' der Oberseite 23a des Griffs 23, der dem Benutzer zugewandt ist, gegenüber dem dem Tankinneren zugewandten Abschnitt 23a" der Oberseite 23a in Richtung der Lotrechten (nach oben hin) gesehen leicht erhöht ausgebildet ist, ist zwischen der Oberkante 22a einerseits und dem dem Benutzer zugewandten Oberflächenabschnitt 23a' der Oberseite 23a des Griffs 23 andererseits eine parallel zur Grifflängsachse verlaufende Rinne 23r auf der Oberseite 23a ausgebildet, in der überlaufendes Wasser in Richtung der Grifflängsachse gesehen beidseits zu den Griffenden hin abfließen kann. Das abfließende Wasser W' fließt dann außerhalb der Unterbrechung, also unterhalb der stehengebliebenen Oberkantenabschnitte 22a am Griff 23 und an der Vorderseite 22 des Tanks 2 nach unten. Bei geeigneter Positionierung der Tropfschale 21 (nicht gezeigt) am unteren, also bodengruppenzugewandten Ende der Vorderseite 22 wird das überfließende Wasser W' in der Tropfschale 21 aufgefangen.

Ein solcher Überlauf 20 hat den Vorteil, dass der Benutzer der Maschine 1 die Überfüllung des Tanks 2 sofort wahrnehmen kann, wobei gleichzeitig die vom Benutzer verwendeten, zu ihm hingewandten Griffabschnitte des Handgriffs 23 von einer Wasserbenetzung freibleiben.

## Patentansprüche

1. Getränkebereiter, insbesondere elektrisch betriebene Kaffeemaschine (1), mit
einem Wassertank (2), der mit Wasser (W) befüllbar ist, mit dem (W) ein Getränk durch den Getränkebereiter zubereitbar ist,
wobei der Getränkebereiter über einen Zulauf (3) mit einem Trinkwassernetz (T) verbindbar ausgebildet ist,
***dadurch gekennzeichnet, dass***
der Wassertank (2) in einem Zustand (Z1), in dem der Getränkebereiter über den Zulauf (3) mit dem Trinkwassernetz (T) verbunden ist, manuell durch einen Benutzer des Getränkebereiters aus dem Getränkebereiter entnehmbar ist und/oder mit dem Wasser (W) wahlweise durch manuelles Einfüllen von Wasser durch einen/den Benutzer des Getränkebereiters oder durch Zuleiten von Trinkwasser aus dem Trinkwassernetz (T) über den Zulauf (3) befüllbar ist,
wobei der Getränkebereiter eine Steuereinrichtung (4) umfasst, mit der feststellbar ist, ob oder ob nicht der Getränkebereiter über den Zulauf (3) mit dem Trinkwassernetz (T) verbunden ist, wobei im verbundenen Zustand (Z1) vermittels der Steuereinrichtung (4) ein Umschalten ermöglicht ist zwischen einem ersten Betriebsmodus des Getränkebereiters, in dem das manuelle Einfüllen des Wassers in den Wassertank (2) durch den Benutzer erfolgt, und einem zweiten Betriebsmodus des Getränkebereiters, in dem das Zuleiten des Trinkwassers aus dem Trinkwassernetz (T) über den Zulauf (3) in den Wassertank (2) erfolgt.

2. Getränkebereiter nach dem vorhergehenden Anspruch
***dadurch gekennzeichnet, dass***
der so entnehmbare Behälter nach seiner Entnahme außerhalb des Getränkebereiters reinigbar ist.

3. Getränkebereiter nach einem der vorhergehenden Ansprüche
***dadurch gekennzeichnet, dass***
in einem Zustand (Z0), in dem der Getränkebereiter nicht über den Zulauf (3) mit dem Trinkwassernetz (T) verbunden ist, vermittels der Steuereinrichtung (4) lediglich der erste Betriebsmodus, nicht aber der zweite Betriebsmodus des Getränkebereiters ermöglicht ist.

4. Getränkebereiter nach einem der vorhergehenden Ansprüche
***gekennzeichnet durch***
ein Gehäuse (5) des Getränkebereiters, innerhalb dessen der Wassertank (2) untergebracht ist oder unterbringbar ist, wobei der Zulauf (3) einen am Gehäuse (5) angebrachten hydraulischen Anschluss (6) aufweist, und
durch ein an diesem hydraulischen Anschluss (6) einerseits und am Trinkwassernetz (T) andererseits anschließbares oder angeschlossenes Festwasserkit (7), das bevorzugt außerhalb des Gehäuses (5) positionierbar ist oder positioniert ist.

5. Getränkebereiter nach dem vorhergehenden Anspruch
***dadurch gekennzeichnet, dass***
das Festwasserkit (7) umfasst: einen zum hydraulischen Anschluss (6) des Gehäuses (5) komplementär ausgebildeten hydraulischen Anschluss (8) zum Herstellen einer Fluidverbindung zwischen dem Festwasserkit (7) einerseits und dem Wassertank (2) andererseits über die beiden hydraulischen Anschlüsse (6, 8), einen mechanischen Anschluss (9) zum Fixieren des Festwasserkits (7) am Gehäuse (5) und einen elektrischen Anschluss (10) zum elektrischen Verbinden des Festwasserkits (7) mit dem Getränkebereiter, insbesondere mit einer/der Steuereinrichtung (4) desselben.

6. Getränkebereiter nach einem der beiden vorhergehenden Ansprüche
***dadurch gekennzeichnet, dass***
das Festwasserkit (7) ein Ventil (14), insbesondere ein Magnetventil, umfasst, das, je nach Schaltstellung, einen Durchfluss von Wasser durch das Festwasserkit (7) ermöglicht oder sperrt
und/oder
dass das Festwasserkit (7) einen Flussregler (15), insbesondere einen Druckminderer oder eine Blende, umfasst,
wobei bevorzugt mit dem Ventil (14) und/oder mit dem Flussregler (15) eine Wasserdurchflussmenge pro Zeiteinheit durch das Festwasserkit (7) hindurch steuerbar und/oder regelbar ist, beispielsweise vermittels einer/der Steuereinrichtung (4) des Getränkebereiters steuerbar und/oder regelbar ist.

7. Getränkebereiter nach dem vorhergehenden Anspruch
***dadurch gekennzeichnet, dass***
das Ventil (14) und/oder der Flussregler (15) so ausgebildet und/oder steuerbar und/oder regelbar ist/sind, dass während des Zubereitens eines/des Getränks durch den Getränkebereiter pro Zeiteinheit mehr Wasser aus dem Trinkwassernetz (T) über das Festwasserkit (7) und den Zulauf (3) in den Wassertank (2) eingeleitet wird, als wegen des Zubereitens des Getränks aus dem Wassertank (2) entnommen wird.

8. Getränkebereiter nach einem der vorhergehenden Ansprüche
***dadurch gekennzeichnet, dass***
der Wassertank (2) aus dem oder vom Getränkebereiter, insbesondere aus einem/dem oder vom Gehäuse (5) desselben, entnehmbar oder abnehmbar ist und dass ein Präsenzsensor (11) im oder am Getränkebereiter vorhanden ist, mit dem feststellbar ist, ob der Wassertank (2) im oder am Getränkebereiter, insbesondere im oder am Gehäuse (5) desselben, vorhanden ist oder nicht.

9. Getränkebereiter nach einem der vorhergehenden Ansprüche
***gekennzeichnet durch***
einen oder mehrere Füllstandsensor(en) (12), mit dem/denen der aktuell im Wassertank (2) herrschende Wasserfüllstand erfassbar ist und/oder erfassbar ist, ob (ein) vordefinierte(r) Wasserstand/Wasserstände erreicht wird/werden, überschritten wird/werden und/oder unterschritten wird/werden.

10. Getränkebereiter nach einem der vorhergehenden Ansprüche
***dadurch gekennzeichnet, dass***
ein Verbindungssensor (13) im oder am Getränkebereiter vorhanden ist, mit dem feststellbar ist, ob der Getränkebereiter über den Zulauf (3) mit dem Trinkwassernetz (T) verbunden ist oder nicht,
wobei bevorzugt - bei Rückbezug auf einen der Ansprüche 4 bis 7 - mit dem Verbindungssensor (13) feststellbar ist, ob das Festwasserkit (7) zumindest am hydraulischen Anschluss (6) angeschlossen ist oder nicht, bevorzugt feststellbar ist, ob das Festwasserkit (7) sowohl am hydraulischen Anschluss (6) als auch am Trinkwassernetz (T) angeschlossen ist oder nicht, das heißt ob eine Fluidverbindung zwischen dem Wassertank (2) einerseits und dem Trinkwassernetz (T) andererseits besteht.

11. Getränkebereiter nach einem der vorhergehenden Ansprüche
***gekennzeichnet durch***
einen in den Wassertank (2) führenden Wassereinlauf (16), der eine Luftstrecke (17) aufweist, die aus dem Trinkwassernetz (T) entnommenes Trinkwasser vor dem und/oder beim Einfließen in den Wassertank (2) durchlaufen muss,
wobei der Wassereinlauf (16) bevorzugt so ausgeformt ist, dass das einfließende Trinkwasser in einem oberen Bereich (18) des Wassertankinneren schräg gegen eine Innenwandung (19) des Wassertanks (2) geleitet wird.

12. Getränkebereiter nach einem der vorhergehenden Ansprüche
***gekennzeichnet durch***
einen Überlauf (20) des Wassertanks (2), über den beim Überlaufen des Wassertanks (2) aus letzterem überlaufendes Wasser (W') entweder in eine Tropfschale (21) des Getränkebereiters oder in einen separaten, d. h. nicht mit dem Getränkeauslass des Getränkebereiters für das zubereitete Getränk identischen Fluidablauf des Getränkebereiters ableitbar ist.

13. Getränkebereiter nach dem vorhergehenden Anspruch
***dadurch gekennzeichnet, dass***
der Überlauf (20) an der einem Benutzer des Getränkebereiters zugewandten Vorderseite (22) des Wassertanks (2) ausgebildet ist und so ausgeformt ist, dass das überlaufende Wasser (W*'*) für den Benutzer sichtbar ist, insbesondere für den Benutzer sichtbar an der Vorderseite (22) des Wassertanks (2) herunter läuft.

## Claims

1. Beverage maker, in particular electrically operated coffee machine (1), having
a water tank (2) which can be filled with water (W), with which (W) a beverage can be prepared by the beverage maker,
the beverage maker being configured to be connectable to a drinking water network (T) via an inflow (3),
***characterised in that***
the water tank (2), in a state (Z1) in which the beverage maker is connected to the drinking water network (T) via the inflow (3), can be removed manually from the beverage maker by a user of the beverage maker and/or can be filled with the water (W) optionally by manual filling of water by a/the user of the beverage maker or by supplying drinking water from the drinking water network (T) via the inflow (3),
the beverage maker comprising a control device (4) with which it can be established whether or whether not the beverage maker is connected to the drinking water network (T) via the inflow (3), wherein, in the connected state (Z1), switching by means of the control device (4) is made possible between a first operating mode of the beverage maker in which manual filling of the water into the water tank (2) is effected by the user, and a second operating mode of the beverage maker in which the supply of drinking water is effected from the drinking water network (T) via the inflow (3) into the water tank (2).

2. Beverage maker according to the preceding claim,
***characterised in that***
the thus removable container can be cleaned after its removal outside the beverage maker.

3. Beverage maker according to one of the preceding claims,
***characterised in that***
in a state (ZO) in which the beverage maker is not connected to the drinking water network (T) via the inflow (3), merely the first operating mode but not the second operating mode of the beverage maker is made possible by means of the control device (4).

4. Beverage maker according to one of the preceding claims,
***characterised by***
a housing (5) of the beverage maker, within which the water tank (2) is accommodated or can be accommodated, the inflow (3) having a hydraulic connection (6) fitted to the housing (5), and
by a fixed mains water kit (7) which can be connected or is connected to this hydraulic connection (6), on the one hand, and to the drinking water network (T), on the other hand, which kit can be positioned or is positioned preferably outside the housing (5).

5. Beverage maker according to the preceding claim,
***characterised in that***
the fixed mains water kit (7) comprises: a hydraulic connection (8) configured complementarily to the hydraulic connection (6) of the housing (5), for producing a fluid connection between the fixed mains water kit (7), on the one hand, and the water tank (2), on the other hand, via the two hydraulic connections (6, 8), a mechanical connection (9) for fixing the fixed mains water kit (7) to the housing (5) and an electrical connection (10) for electrical connection of the fixed mains water kit (7) to the beverage maker, in particular to a/the control device (4).

6. Beverage maker according to one of the two preceding claims,
***characterised in that***
the fixed mains water kit (7) comprises a valve (14), in particular a magnetic valve, which, according to the switching position, allows or blocks a throughflow of water through the fixed mains water kit (7)
and/or
**in that** the fixed mains water kit (7) comprises a flow regulator (15), in particular a pressure reducer or a diaphragm,
wherein, preferably with the valve (14) and/or with the flow regulator (15), a water throughflow quantity per unit of time through the fixed mains water kit (7) can be controlled and/or regulated, for example can be controlled and/or regulated by means of a/the control device (4) of the beverage maker.

7. Beverage maker according to the preceding claim,
***characterised in that***
the valve (14) and/or the flow regulator (15) is/are configured and/or can be controlled and/or regulated such that, during preparation of a/the beverage by the beverage maker, more water, per unit of time, is conducted from the drinking water network (T) via the fixed mains water kit (7) and the inflow (3) into the water tank (2) than is removed from the water tank (2) because of the preparation of the beverage.

8. Beverage maker according to one of the preceding claims,
***characterised in that***
the water tank (2) can be removed or taken out of the or from the beverage maker, in particular out of a/the or from the housing (5) of the same and **in that** a presence sensor (11) is present in or on the beverage maker with which it can be established whether the water tank (2) is present or not in or on the beverage maker, in particular in or on the housing (5) of the same.

9. Beverage maker according to one of the preceding claims,
***characterised by***
one or more level sensor(s) (12) with which the water level prevailing currently in the water tank (2) can be detected and/or it can be detected whether (a) predefined water level/levels is/are reached, is/are exceeded and/or is/are fallen below.

10. Beverage maker according to one of the preceding claims,
***characterised in that***
a connection sensor (13) is present in or on the beverage maker with which it can be established whether the beverage maker is connected or not to the drinking water network (T) via the inflow (3),
wherein preferably - with reference to one of the claims 4 to 7 - it can be established with the connection sensor (13) whether the fixed mains water kit (7) is connected or not at least to the hydraulic connection (6), preferably it can be established whether the fixed mains water kit (7) is connected or not both to the hydraulic connection (6) and to the drinking water network (T), i.e. whether a fluid connection between the water tank (2), on the one hand, and the drinking water network (T), on the other hand, exists.

11. Beverage maker according to one of the preceding claims,
***characterised by***
a water inflow (16), which leads into the water tank (2) and has an air stretch (17) which must pass through drinking water removed from the drinking water network (T) before and/or during flowing into the water tank (2),
the water inflow (16) being shaped preferably such that the inflowing drinking water, in an upper region (18) of the water tank interior, is conducted diagonally against an inner wall (19) of the water tank (2).

12. Beverage maker according to one of the preceding claims,
***characterised by***
an overflow (20) of the water tank (2), via which, during overflow of the water tank (2), water (W') flowing out of the latter can be discharged either into a drip pan (21) of the beverage maker or into a separate, i.e. which is not identical to the beverage outlet of the beverage maker for the prepared beverage, fluid outflow of the beverage maker.

13. Beverage maker according to the preceding claim,
***characterised in that***
the overflow (20) is configured on the front-side (22) of the water tank (2), orientated towards a user of the beverage maker, and is shaped such that the overflowing water (W') is visible for the user, in particular runs down visibly for the user on the front-side (22) of the water tank (2).

## Revendications

1. Appareil préparateur de boissons, plus particulièrement machine à café électrique (1) avec
un réservoir d'eau (2), qui peut être rempli d'eau (W), avec laquelle (W), une boisson peut être préparée par l'appareil préparateur de boissons,
l'appareil préparateur de boissons étant conçu de façon à pouvoir être relié par l'intermédiaire d'une arrivée d'eau (3), avec un réseau d'eau potable (T),
**caractérisé en ce que**
le réservoir d'eau (2), dans un état (Z1), dans lequel l'appareil préparateur de boissons est relié par l'intermédiaire de l'arrivée d'eau (3), avec le réseau d'eau potable (T), peut être retiré manuellement par un utilisateur hors de l'appareil préparateur de boissons et/ou peut être rempli d'eau (W) au choix par une introduction manuelle d'eau par un/l'utilisateur de l'appareil préparateur de boissons ou par l'arrivée d'eau potable à partir du réseau d'eau potable (T) par l'intermédiaire de l'arrivée d'eau (3),
dans lequel l'appareil préparateur de boissons comprend un dispositif de commande (4) avec lequel il est possible constater si l'appareil préparateur de boissons est relié ou non par l'intermédiaire du réseau d'eau potable (T) par l'intermédiaire de l'arrivée d'eau (3), dans lequel, dans l'état relié (Z1), le dispositif de commande (4) permet une commutation entre un premier mode de fonctionnement de l'appareil préparateur de boissons, dans lequel a lieu l'introduction manuelle d'eau dans le réservoir d'eau (2) par l'utilisateur, et un deuxième mode de fonctionnement de l'appareil préparateur de boissons, dans lequel a lieu l'arrivée d'eau potable à partir du réseau d'eau potable (T) par l'intermédiaire de l'arrivée d'eau (3) dans le réservoir d'eau (2).

2. Appareil préparateur de boissons selon la revendication précédente,
**caractérisé en ce que**
le récipient pouvant ainsi être retiré peut être nettoyé après son retrait hors de l'appareil préparateur de boissons.

3. Appareil préparateur de boissons selon l'une des revendications précédentes,
**caractérisé en ce que**
dans un état (Z0), dans lequel l'appareil préparateur de boissons n'est pas relié par l'intermédiaire de l'arrivée d'eau (3) avec le réseau d'eau potable (T), le dispositif de commande (4) permet uniquement le premier mode de fonctionnement mais pas le deuxième mode de fonctionnement de l'appareil préparateur de boissons.

4. Appareil préparateur de boissons selon l'une des revendications précédentes,
**caractérisé par**
un boîtier (5) de l'appareil préparateur de boissons, à l'intérieur duquel est logé ou peut être logé le réservoir d'eau (2), dans lequel l'arrivée d'eau (3) comprend un raccord hydraulique (6) monté sur le boîtier (5) et
un raccordement d'eau fixe (7) raccordé ou pouvant être raccordé à ce raccord hydraulique (6) d'une part et au réseau d'eau potable (T) d'autre part, qui peut être positionné ou est positionné de préférence à l'extérieur du boîtier (5).

5. Appareil préparateur de boissons selon la revendication précédente,
**caractérisé en ce que**
le raccordement d'eau fixe (7) comprend : un raccord hydraulique (8) complémentaire du raccord hydraulique (6) du boîtier (5) pour l'établissement d'une liaison fluidique entre le raccordement d'eau fixe (7) d'une part et le réservoir d'eau (2) d'autre part par l'intermédiaire des deux raccords hydrauliques (6, 8), un raccord mécanique (9) pour la fixation du raccordement d'eau fixe (7) au boîtier (5) et un raccord électrique (10) pour le branchement électrique du raccordement d'au fixe (7) avec l'appareil préparateur de boissons, plus particulièrement avec un/le dispositif de commande (4) de celui-ci.

6. Appareil préparateur de boissons selon l'une des revendications précédentes,
**caractérisé en ce que**
le raccordement d'eau fixe (7) comprend une vanne (14), plus particulièrement une électrovanne qui, selon la position de commutation, permet ou bloque un passage d'eau à travers le raccordement d'eau fixe (7)
et/ou
le raccordement d'eau fixe (7) comprend un régulateur de flux (15), plus particulièrement un réducteur de pression ou un diaphragme,
dans lequel, de préférence avec la vanne (14) et/ou avec le régulateur de flux (15), le passage d'une quantité d'eau par unité de temps à travers le raccordement d'eau fixe (7) peut être contrôlé et/ou régulé, par exemple peut être contrôlé et/ou régulé au moyen d'un/du dispositif de commande (4) de l'appareil préparateur de boissons.

7. Appareil préparateur de boissons selon la revendication précédente,
**caractérisé en ce que**
la vanne (14) et/ou le régulateur de flux (15) est/sont conçu·e·s et/ou peut/peuvent être contrôlé·e s et/ou régulé-e s de façon à ce que, pendant la préparation d'une/de la boisson par l'appareil préparateur de boissons, plus d'eau par unité de temps est introduite du réseau d'eau potable (T) par l'intermédiaire du raccordement d'eau fixe (7) et de l'arrivée d'eau (3) vers le réservoir d'eau (2), que celle qui est retirée du réservoir d'eau (2) du fait de la préparation de la boisson.

8. Appareil préparateur de boissons selon l'une des revendications précédentes,
**caractérisé en ce que**
le réservoir d'eau (2) peut être retiré ou détaché de l'appareil préparateur de boissons, plus particulièrement hors d'un/du ou du boîtier (5) de celui-ci, et **en ce qu'**un capteur de présence (11) est présent dans ou sur l'appareil préparateur de boissons, avec lequel il est possible de détecter si le réservoir d'eau (2) est présent ou non dans ou sur l'appareil préparateur de boissons, plus particulièrement dans ou sur le boîtier (5) de celui-ci.

9. Appareil préparateur de boissons selon l'une des revendications précédentes,
**caractérisé par**
un ou plusieurs capteur-s de niveau d'eau (12), avec lequel/lesquels le niveau d'eau dans le réservoir d'eau (2) peut être mesuré et/ou il est possible de mesurer si un/des niveau·x d'eau prédéfini-s est/sont atteint·s, dépassé-s et/ou non encore atteint·s.

10. Appareil préparateur de boissons selon l'une des revendications précédentes,
**caractérisé en ce que**
un capteur de liaison (13) est présent dans ou sur l'appareil préparateur de boissons, avec lequel il est possible de détecter si l'appareil préparateur de boissons est relié ou non avec le réseau d'eau potable (T) par l'intermédiaire de l'arrivée d'eau (3),
dans lequel, de préférence - en référence à une des revendications 4 à 7 - avec le capteur de liaison (13), il est possible de détecter sur le raccordement d'eau fixe (7) est raccordé au moins au raccord hydraulique (6) ou non, de préférence il est possible de détecter si le raccordement d'eau fixe (7) est raccordé aussi bien au raccord hydraulique (6) qu'au réseau d'eau potable (T) ou non, c'est-à-dire si une liaison fluidique existe entre le réservoir d'eau (2) d'une part et le réseau d'eau potable (T) d'autre part.

11. Appareil préparateur de boissons selon l'une des revendications précédentes,
**caractérisé par**
une entrée d'eau (16) conduisant au réservoir d'eau (2), qui comprend un trajet d'air (17) que l'eau potable prélevée dans le réseau d'eau potable (T) doit traverser avant et/ou lors de l'introduction dans le réservoir d'eau (2),
dans lequel l'entrée d'eau (16) est de préférence formée de façon à ce que l'eau potable entrante soit conduite dans une zone supérieure (18) de l'intérieur du réservoir d'eau de manière inclinée contre une paroi interne (19) du réservoir d'eau (2).

12. Appareil préparateur de boissons selon l'une des revendications précédentes,
**caractérisé par**
un trop-plein (20) du réservoir d'eau (2), par l'intermédiaire duquel, lors du débordement du réservoir d'eau (2) de ce dernier, l'eau en excès (W') peut être déviée soit dans un égouttoir (21) de l'appareil préparateur de boissons soit dans une évacuation de fluide séparée de l'appareil préparateur de boissons, c'est-à-dire pas identique avec la sortie de boisson de l'appareil préparateur de boissons pour la boisson préparée.

13. Appareil préparateur de boissons selon l'une des revendications précédentes,
**caractérisé en ce que**
le trop-plein (20) est réalisé sur le côté avant (22) du réservoir d'eau (2) orienté vers un utilisateur de l'appareil préparateur de boissons et est formé de façon à ce que l'eau en excès (W') soit visible pour l'utilisateur, plus particulièrement descende de manière visible pour l'utilisateur le long du côté avant (22) du réservoir d'eau (2).
